Europäisches Patentamt

European Patent Office

Office européen des brevets

(19)

(11) **EP 0 944 158 A2**

(12) **EUROPEAN PATENT APPLICATION**

(43) Date of publication:
**22.09.1999 Bulletin 1999/38**

(51) Int. Cl.⁶: **H02K 19/10**, H02K 1/08

(21) Application number: **99100156.1**

(22) Date of filing: **07.01.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **16.03.1998 KR 9808755**

(71) Applicant: **LG ELECTRONICS INC.**
**Seoul (KR)**

(72) Inventor: **Lim, Jun Young**
**Namdong-ku, Inchon (KR)**

(74) Representative:
**Cohausz & Florack**
**Patentanwälte**
**Kanzlerstrasse 8a**
**40472 Düsseldorf (DE)**

(54) **Motor having air-gaps in various types**

(57)   A motor having air-gaps in various types according to the present invention, which generates relatively large torque even with the small number of coils by enlarging opposed surfaces of a stator and a rotator of the motor having the same size without increasing the size of the motor or the number of coils, reduces the noise and vibration of the motor by periodically dispersing magnetizing force between a stator and a rotator which works in one direction such as a pivotal direction or a radial direction of a pivot to other directions, and also facilitates the assembly of a stator and a rotator, includes a stator with a plurality of teeth and a rotator with a plurality of teeth which are opposed to said teeth of the stator which rotates by magnetic force working between the teeth of the stator and the rotator, the rotator having a pivot in a center thereof, a motor having air-gaps in various types, and air-gaps provided between opposed surfaces of the teeth of the stator and opposed surfaces of the teeth of the rotator, the air-gaps at least having a direction which is not the radial direction of the pivot.

FIG.3A

## Description

BACKGROUND OF THE INVENTION

1. Field of the Invention

The present invention relates to a switched reluctance motor that rotates a rotator by the reluctance torque generated in air-gaps formed between teeth of a stator and teeth of the rotator, and more particularly to a motor having air-gaps in various types that generates large torque even with the small number of coils by forming the air-gaps in various directions such as a radial direction of a pivot, a pivotal direction and other directions and also decreases the noise and vibration of the motor.

2. Description of the Conventional Art

Generally, a motor is mainly divided into an opposed circumferential type in which air-gaps are formed in a radial direction of a pivot thereof and an opposed plane type in which air-gaps are formed in a pivotal direction in accordance with the arrangement of a stator and a rotator and usually the air-gaps are uniformly formed in either of the radial or pivotal directions.

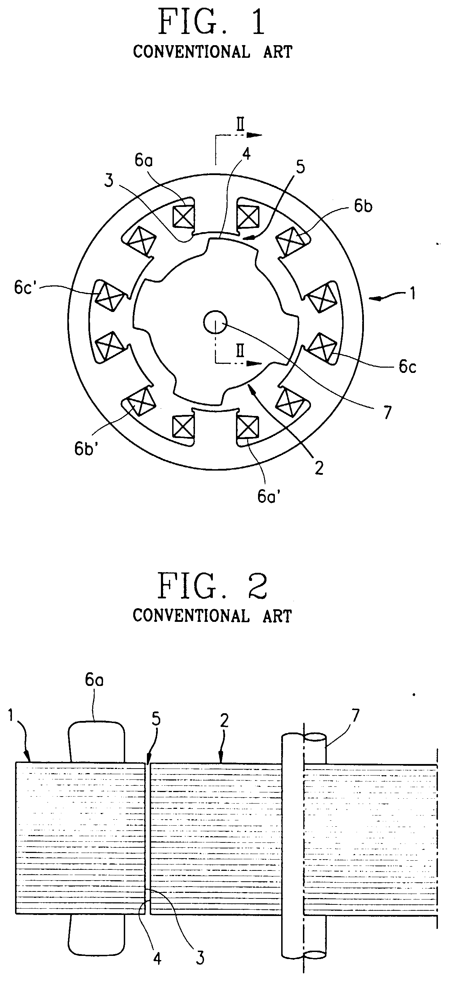

As shown in Fig. 1, in the conventional switched reluctance motor which is the opposed circumferential type, a plurality of teeth 3, 4 are respectively provided at opposed faces of a stator 1 and rotator 2 and air-gaps 5 are formed between the teeth 3, 4 of the stator 1 and the rotator 2 only in the radial direction.

In addition, coils 6a, 6a', 6b, 6b', 6c, 6c' are wound around outer circumferential portions of the teeth 3 of the stator 1, while no coil is wound around outer circumferential portions of the rotator 2. Here, the rotator does not have a permanent magnet, but is fabricated with a core of a soft magnetic anisotropic material which can be magnetized in a magnetic field. Accordingly, when power is applied to a specific coil winding around the outer circumferential portions of the stator 1, the rotator 1 rotates by virtue of the reluctance torque to the air gaps 5 formed in the radial direction of a pivot thereof.

In more detail, in such switched reluctance motor, the reluctance of the magnetic circuit periodically varies in accordance with the position of the rotator 2. That is, when sequentially magnetizing the coils 6a, 6a', 6b, 6b', 6c, 6c' wound around the teeth 3 of the rotator 1, the teeth 3 of the stator 1 wound by the magnetized coils respectively have a specific magnetic pole (an N or S pole) according to a direction of a current (the wiring direction) which flows in each coil, and the teeth 3 of the stator 1 having the specific pole respectively magnetize and pull the near-by teeth 4 of the rotator 2 so that the rotator 2 rotates by each step.

As an example, Fig. 1 illustrates a condition in which A-phase coils 6a, 6a' and C-phase coils 6c, 6c' are simultaneously magnetized. In such condition, when magnetizing only the A-phase coils 6a, 6a', the rotator 2 rotates anticlockwise at predetermined degrees. Then, the rotator 2 continually rotates by sequentially magnetizing the A-phase coils 6a, 6a' and the B-phase coils 6b, 6b', the B-phase coils 6b, 6b', the B-phase coils 6b, 6b' and the C-phase coils 6c, 6c', and then the C-phase coils 6c, 6c'.

Here, in order to reinforce the rotation torque, it is necessary to increase the number of the coils or the area of the air-gaps provided between the teeth 3, 4 of the stator 1 and the rotator 2 for thereby intensifying the magnetic flux density or magnetizing force.

However, in the conventional switched reluctance motor, to enlarge the area of the air-gaps to increase the rotation torque, the diameters of the stator and the core of the rotator should be formed in a large size which results in increase in a size of the motor.

In addition, as shown in Fig. 2, since the air-gaps between the teeth of the stator and the rotator are formed in the radial directions of the pivot thereof, thus the reluctance torque is generated only in the radial direction of the pivot. Therefore, when both teeth are directly opposite to each other, the pivot is pulled in the radial direction by virtue of the reluctance torque which works in the radial direction of the pivot, which results in the serious noise and vibration.

SUMMARY OF THE INVENTION

Accordingly, the present invention is directed to a motor having air-gaps in various types which obviates the problems and disadvantages due to the conventional art.

An object of the present invention is to provide a motor having air-gaps in various types that generates relatively large torque even with the small number of coils by enlarging opposed surfaces of a stator and a rotator of the motor having the same size without increasing the size of the motor or the number of coils.

Another object of the present invention is to provide a motor having air-gaps in various types that reduces the noise and vibration of the motor by periodically dispersing magnetizing force between a stator and a rotator which works in one direction such as a pivotal direction or a radial direction of a pivot to other directions.

Still another object of the present invention is to provide a motor having air-gaps in various types that facilitates the assembly of a stator and a rotator.

To achieve these and other advantages and in accordance with the purpose of the present invention, as embodied and broadly described, there is provided a motor having air-gaps in various types which includes a stator with a plurality of teeth and a rotator with a plurality of teeth which are opposed to said teeth of the stator which rotates by magnetic force working between the teeth of the stator and the rotator, the rotator having a pivot in a center thereof, a motor having air-gaps in various types, and air-gaps provided between opposed surfaces of the teeth of the stator and opposed surfaces of the teeth of the rotor, the air-gaps at least having a direction which is not the radial direction of the pivot.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Fig. 1 is a plane diagram illustrating a conventional switched reluctance motor;

Fig. 2 is a cross-sectional diagram taken along the line I-II of Fig. 1;

Fig. 3A is a perspective view illustrating a motor having air-gaps in various types according to a first embodiment of the present invention;

Fig. 3B is separate perspective diagrams illustrating the motor having the air-gaps in the various types according to the first embodiment of the present invention;

Fig. 3C is an enlarged view illustrating a "III$_C$" portion of Fig. 3B;

Fig. 3D is an enlarged view illustrating a "III$_D$" portion of Fig. 3B;

Fig. 4 is a cross-sectional diagram taken along the line IV-IV of Fig. 3A;

Fig. 5 is an enlarged cross-sectional diagram of a "V" portion of Fig. 4;

Fig. 6 is a graph illustrating comparison between inductance generated in the motor having the air-gaps in the various types according to the present invention and the conventional art;

Fig. 7 is a cross-sectional diagram illustrating a part of a motor having air-gaps in various types according to a second embodiment of the present invention;

Fig. 8 is a cross-sectional diagram illustrating a part of a motor having air-gaps in various types according to a third embodiment of the present invention;

Fig. 9 is a cross-sectional diagram illustrating a part of a motor having air-gaps in various types according to a fourth embodiment of the present invention;

Fig. 10A is a cross-sectional diagram of a stator according to a fifth embodiment of the present invention; and

Fig. 10B is a perspective view illustrating halved-cores according to the fifth embodiment of the present invention.

DETAILED DESCRIPTION OF THE INVENTION

Reference will now be made in detail to the preferred embodiments of the present invention, examples of which are illustrated in the accompanying drawings.

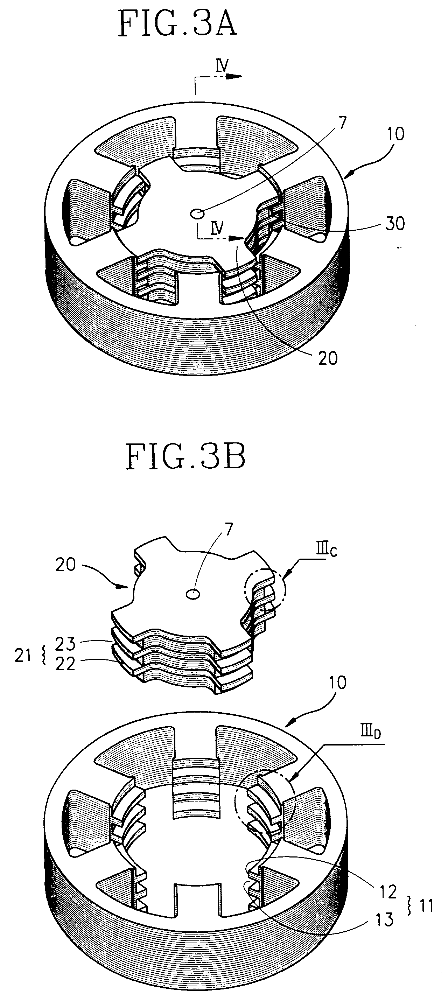

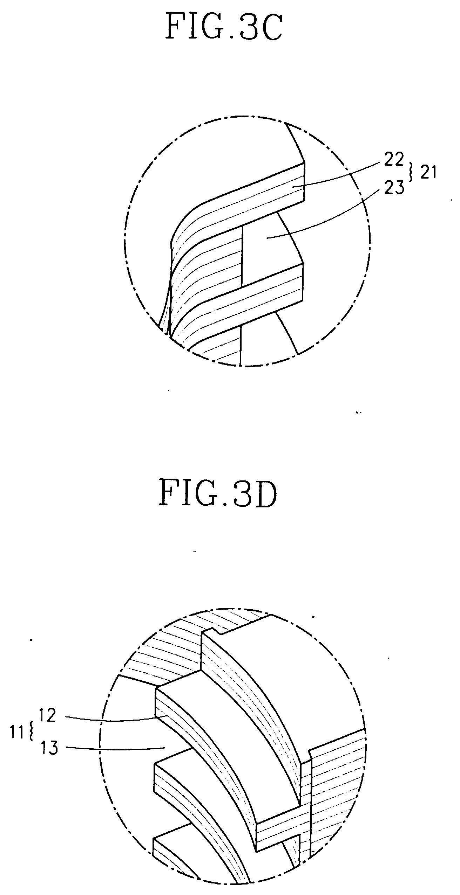

Figs. 3A through 3D illustrate a switched reluctance motor according to a first embodiment of the present invention. As shown therein, a plurality of teeth 11, 21 are formed at opposed faces of a stator 10 and a rotator 20, respectively. Such switched reluctance motor is an opposed circumferential type wherein air-gaps 30 are provided in radial and pivotal directions between the teeth 11, 21 of the stator 10 and the rotator 20.

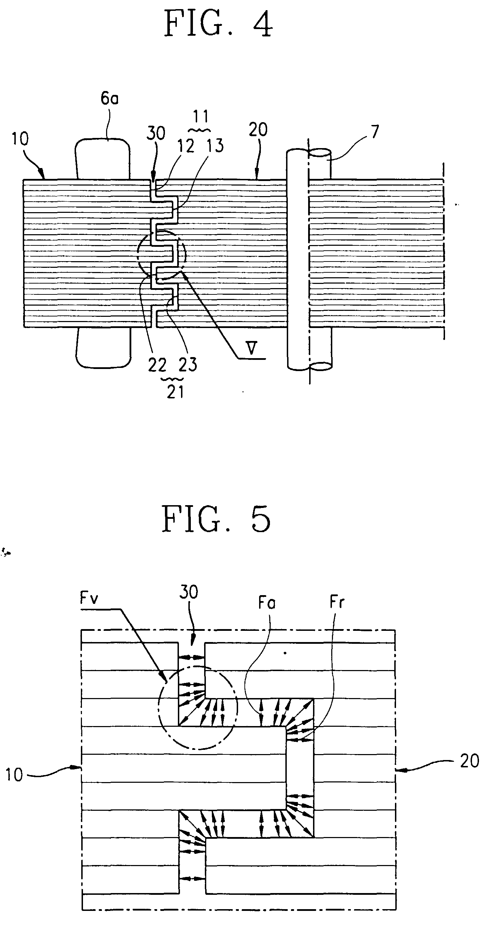

In the opposed teeth 11, 21, there are repeatedly formed protruding portions 12, 22 and concave portions 13, 23, respectively, the protruding portions 12, 22 respectively facing the corresponding concave portions 13, 23. In more detail, the protruding portions 12, 22 of the teeth 11, 21 at both sides are not in contact with each other, but superimposed. Therefore, as shown in Fig. 4, the protruding portions 12 of the teeth 11 of the stator 10 are received into the concave portions 23 of the teeth 21 of the rotator 20, while the protruding portions 22 of the teeth 21 of the rotator 20 are received into the concave portions 13 of the teeth 11 of the stator 10.

Accordingly, the air-gaps 30 provided between the protruding portions 12, 22 and the corresponding concave portions 13, 23 are formed continually in the pivotal direction and the radial direction of the pivot. Therefore, the air-gaps 30 formed continually in the pivotal direction and the radial direction of the pivot according to the present invention have a relatively large area of magnetic surfaces of the opposed teeth 11, 21 with respect to the identical thickness of the core, in comparison with the conventional art in which the air-gaps are formed only in the radial direction of the pivot.

While, it is noted that coils are wound around outer circumferential surfaces of the teeth 11 of the stator 10, but no coils are provided for the rotator 20.

In the thusly provided motor having the air-gaps in the various types according to the present invention, when power is applied to a specific coil winding the stator 10, the rotation torque is generated by the reluctance torque to the air-gaps 30 and thus the rotator 20 accordingly rotates.

More specifically, when magnetizing the coils around the teeth 11 of the stator 10 of the switched reluctance motor having the air-gaps 30 formed in the pivotal direction and the radial direction of the pivot, as mentioned above, the reluctance torque acts in various directions, such as a radial direction Fr, a pivotal direction Fa and other directions Fv, as shown in Fig. 5, between the teeth 11, 21, particularly between the protruding portions 12 of the teeth 11 of the stator 10 and the concave portions 23 of the teeth 21 of the rotator 20 and between the concave portions 13 of the teeth 11 of the stator 10 and the protruding portions 22 of the teeth 21 of the rotator 20. Namely, according to the first embodiment of the present invention, the torque increases in accordance with the reluctance torque generated in the various directions Fr, Fa, Fv as well as the size of the air-gaps 30 is enlarged.

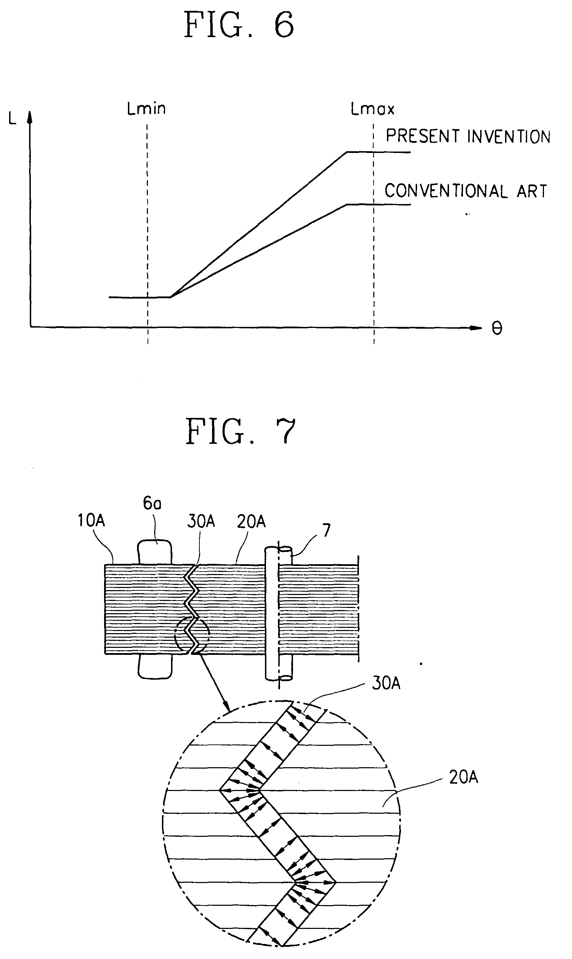

With reference to Fig. 6, the inductance generated in the present invention little increases in the vicinity of a 'Misailgn' point (Lmin) but radically increases in the vicinity of an 'Align' point (Lmax) in comparison with the conventional art. Here, it is noted that the difference of inclination of the inductance is proportioned to the difference of the torque generated in the motor. The above description can be expressed in an equation 1 as follows.

$$T = 1/2 * dL/d\theta * I2 \qquad (1)$$

wherein, T: torque, L: inductance, $\theta$: position of the rotator, and I: current.

That is, the torque T generated in the air-gaps 30 is proportioned with the volume of change of the inductance.

While, a maximum value Lmax of the inductance L is (on condition that the magnetic reluctance of the iron portion is almost disregarded compared with that of the gap portion) can be expressed in a following equation.

$$Lmax = \frac{N2 * A * \mu_0}{g} \qquad (2)$$

wherein, N: the number of coils, A: area of air-gap, $\mu_0$: air permeability, and g: length of air-gap.

Accordingly, The torque is proportioned to a square of the magnetic flux density or the magnetizing force of the air-gaps 30 and also increases proportionally to the opposed areas of the teeth 11, 21 having the air-gaps 30. Thus, according to the present invention, the torque is proportioned to the surface area of the air-gaps and the number of coils is less required to reach the same torque as in the case where the air-gaps are formed only in the radial direction of the pivot.

Meanwhile, in such motor having the air-gaps in the various types, the reluctance torque in the radial direction Fr causes the pivotal vibration, but the other elements of the torque such as the torque elements in the pivotal direction Fa and the various directions Fv do not have a substantial effect upon the vibration. Namely, since many of the vibration generating elements travel in various directions in the motor according to the present invention, in comparison with the case where the air-gaps are formed only in the radial direction of the pivot, entire noise and vibration of the motor decrease to that extend. Fig. 7 illustrates a motor having air-gaps in various types according to a second embodiment of the present invention. As shown therein, each air-gap 30A is formed in a serrate type due to the shape of opposed surfaces of teeth of a stator 10A and a rotator 20A.

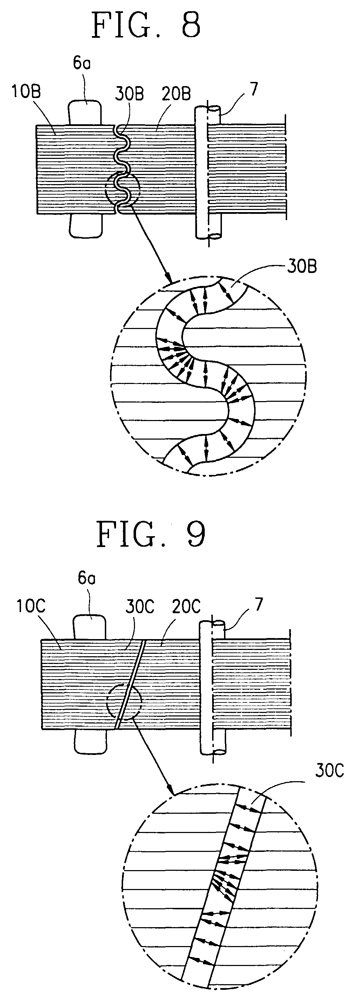

Further, Fig. 8 illustrates a motor having air-gaps in various types according to a third embodiment of the present invention. As shown therein, each air-gap 30B is formed in a wave shape in accordance with the shape of opposed surfaces of teeth of a stator 10B and a rotator 20B.

In addition, Fig. 9 illustrates a motor having air-gaps in various types according to a fourth embodiment of the present invention. As shown therein, each air-gap 30C is formed in one direction slantly to the pivotal direction without a relief in accordance with the shape of opposed surfaces of teeth of a stator 10C and a rotator 20C. Accordingly, the fourth embodiment of the present invention has an effect of reducing the vibration and noise of the motor since the magnetic force having the pivotal-direction element as well as the radial-direction element of the pivot affects in the air-gaps greater than the magnetic force to the other directions.

Therefore, according to the present invention, the torque can be enlarged without increasing the size of the core or the number of coils by forming the air-gaps undulately formed in both of the pivotal direction and the radial direction of the pivot or forming the air-gaps formed slantly to the pivotal direction.

Further, air-gaps can be formed between teeth of a stator and a rotator in various directions and thus the reluctance torque is generated in the various directions, thereby preventing the noise and vibration of the motor generated by the reluctance torque acting in the radial direction of the pivot even in the moment when the teeth of the stator and the rotator are directly opposed.

In such opposed-circumferential-type motor having the air-gaps in the various types according to the embodiments of the present invention, the rotator must be inserted to the stator in the pivotal direction. However, there is a case where it is impossible to assemble the stator and the rotator by inserting the rotator into the stator in accordance with the number of teeth of the rotator and the stator.

More specifically, no difficulty is found in assembling the rotator and the stator when the ratio of the number of teeth of the stator to the number of teeth of the rotator is expressed as a multiplication of an integer - such as, 6/6, 4/4, 4/2, etc. - in the switched reluctance motor, but when the ratio thereof is not expressed as the multiplication of the integer, such as 6/4, the rotator may not be inserted into the stator in the pivotal direction, because if the ratio of the number of the teeth of the stator to the that of the rotator is not expressed as the multiplication of the integer when inserting the rotator into the stator in the pivotal direction, it is not possible to avoid the teeth of the rotator from contacting predetermined portions of the teeth of the stator.

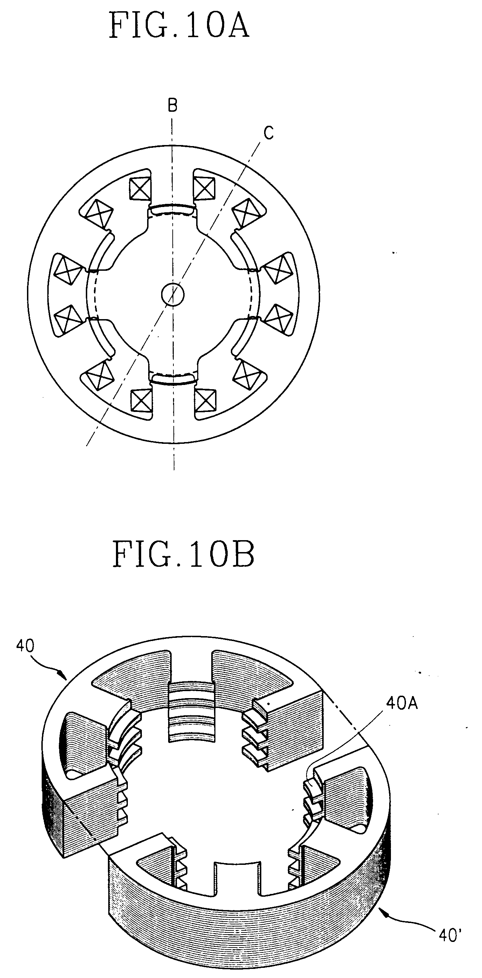

Fig. 10A illustrates a motor having air-gaps according to a fifth embodiment of the present invention. As shown therein, when the ratio of the number of the teeth of the stator to the that of the rotator is not expressed as the multiplication of the integer, the rotator is assembled with the stator by cutting the stator in the B or C direction. Accordingly, as shown in Fig. 10B, even if the ratio of the number of the teeth of the stator to the that of the rotator is not expressed as the multiplication of the integer, the rotator can be inserted and assembled to the stator by using two halved-cores 40, 40' which are the separable cores of the stator. Here, a numeral 40A denotes teeth of the stator.

As described above, in the motor having the air-gaps in the various types according to the present invention, each air-gap is formed in the pivotal direction, the radial direction of the pivot and the other directions between teeth of the stator and the rotator, thereby having a relatively large magnetized surface and thus having an effect of generating large torque even with the small number of coils and a relatively small motor.

In addition, the motor having the air-gaps in the various types according to the present invention can reduce the noise an vibration by decreasing the reluctance torque generated in the air-gaps in the radial direction of the pivot.

Further, according to the present invention, since the number of the coils can be reduced, the motor which generates the same torque can have a compact size and the efficiency of the motor is improved by reducing the resistance of the coils. Particularly, the present invention can be more effectively applied to a single phase motor, which results in the cost-reduction.

Finally, since the stator core is provided with the two halved-cores, the rotator can be easily inserted and assembled to the stator regardless of the ratio of the number of the teeth of the stator to the that of the rotator.

It will be apparent to those skilled in the art that various modifications and variations can be made in the motor having the air-gaps in the various types of the present invention without departing from the spirit or scope of the invention. Thus, it is intended that the present invention cover the modifications and variations of this invention provided they come within the scope of the appended claims and their equivalents.

**Claims**

1. In a motor having a stator with a plurality of teeth and a rotator with a plurality of teeth which are opposed to said teeth of the stator which rotates by magnetic force working between the teeth of the stator and the rotator, the rotator having a pivot in a center thereof, a motor having air-gaps in various types, comprising:

   air-gaps provided between opposed surfaces of the teeth of the stator and opposed surfaces of the teeth of the rotator, the air-gaps at least having a direction which is not the radial direction of the pivot.

2. The motor according to claim 1, wherein the opposed surfaces of the teeth of the stator and the rotator are not in contact with each other, but superimposed.

3. The motor according to claim 2, wherein a shape of the air-gap formed in accordance with the opposed surfaces of the teeth of the stator and the rotator is unevenly shaped by which the opposed surfaces of the teeth of stator and the rotator in an unevenness type are alternately engaged with each other.

4. The motor according to claim 3, wherein protruding portions and concave portions are repeatedly formed at the opposed surfaces of the teeth of the stator and the rotator, respectively, and the protruding portions of the teeth of the stator are received into the concave portions of the teeth of the rotator, while the protruding portions of the teeth of the rotator are received into the concave portions of the teeth of the stator.

5. The motor according to claim 2, wherein each air-gap provided by the opposed surfaces of the teeth of the stator and the rotator is in a serrate type.

6. The motor according to claim 2, wherein each air-gap provided by the opposed surfaces of the teeth of the stator and the rotator is in a wave shape.

7. The motor according to claim 1, wherein each air-gap provided by the opposed surfaces of the teeth of the stator and the rotator is formed in one direction slantly to the pivotal direction.

8. The motor according to claim 1, wherein the ratio of the number of the teeth of the stator to that of the rotator is a multiplication of an integer.

9. The motor according to claim 1, wherein the ratio of the number of the teeth of the stator to that of the rotator is not a multiplication of an integer and the stator includes separable halved-cores.

# FIG. 1
## CONVENTIONAL ART

# FIG. 2
## CONVENTIONAL ART

# FIG.3A

# FIG.3B

# FIG.3C

# FIG.3D

# FIG. 4

# FIG. 5

# FIG. 6

Lmin    Lmax

L

PRESENT INVENTION

CONVENTIONAL ART

θ

# FIG. 7

10A    6a    30A    20A    7

30A

20A

# FIG. 8

# FIG. 9

FIG.10A

FIG.10B